# FASCICULE DE BREVET EUROPEEN

(11) **EP 4 308 830 B1**
(45) Date de publication et mention de la délivrance du brevet: **15.01.2025**
(21) Numéro de dépôt: 22708994.3
(22) Date de dépôt: 14.02.2022
(51) Int. Cl.: F16H 61/44, F16H 61/47

(54) **SYSTÈME ET PROCÉDÉ DE CONTRÔLE DE TRACTION AMÉLIORÉ**
SYSTEM UND VERFAHREN ZUR VERBESSERTEN TRAKTIONSSTEUERUNG
SYSTEM AND METHOD FOR IMPROVED TRACTION CONTROL

(30) Priorité: 15.03.2021 FR 2102542
(43) Date de publication de la demande: 24.01.2024
(73) Titulaire: Poclain Hydraulics Industrie, 60410 Verberie (FR)
(72) Inventeur: HEREN, Jean, 60410 VERBERIE (FR)
(74) Mandataire: Cabinet Beau de Loménie
(86) Numéro de dépôt international: PCT/FR2022/050267
(87) Numéro de publication internationale: WO 2022/195189

(56) Documents cités:
- US-A- 4 121 601
- US-A- 4 140 196
- US-B1- 6 408 972

## Description

### Domaine Technique

Le présent exposé concerne les systèmes hydrauliques, et notamment le contrôle de traction et l'antipatinage d'un circuit de transmission hydrostatique.

### Technique antérieure

Sur les véhicules et engins ayant des fonctions tout terrain ou des organes mobiles tels que des organes de levage ou une tourelle, les conditions d'utilisation peuvent conduire à des situations dans lesquelles la charge est menante, notamment de par son inertie. Ces situations nécessitent ainsi d'intégrer des moyens de freinage pour le système. Pour la traction, on intègre alors de manière conventionnelle des moyens de freinage à friction, ou on prévoit une utilisation du frein moteur. L'utilisation en frein moteur est agréable pour la conduite sur le long terme, et permet d'éviter un échauffement de freins à friction sur le long terme. On comprend cependant que de tels systèmes entrainent des pertes importantes.

Les circuits de type régénératifs visent généralement à améliorer cette problématique. De tels circuits permettent notamment d'exploiter des phases de freinage ou de décélération pour recharger des batteries ou accumulateurs, ce qui vient absorber l'énergie de la transmission en la récupérant et ainsi réaliser une fonction de frein moteur. Dans ces phases, on souhaite effectuer une retenue du véhicule ou de l'engin, c'est-à-dire un effort qui s'oppose au déplacement au niveau des roues. Dans le cas d'un système régénératif, l'effort de retenue à la roue s'appuie sur le rechargement de batteries ou d'accumulateurs. Toutefois, de tels circuits posent des problématiques importantes en termes de capacité à assurer une fonction de retenue de la transmission en cas de défaillance du système de pilotage, et également dans le cas où les batteries ou accumulateurs sont entièrement chargés. En particulier, dans le cas d'une demande de retenue sur une période de temps longue, par exemple dans une longue descente, lorsque les batteries ou accumulateurs sont chargés, il se produit une perte de la fonction de retenue. Par exemple, il peut être nécessaire de supprimer le transfert d'énergie vers les accumulateurs pour ne pas les détériorer lorsqu'ils sont chargés.

Par ailleurs, il est nécessaire d'assurer une fonction de contrôle de traction ou d'anti-patinage des différents organes de déplacement du véhicule.

Les solutions proposées (voir par exemple US 4 140 196 A) reposent toutefois sur une démultiplication de composants qui est fortement pénalisante en termes de coût, d'encombrement et de puissance consommée.

Le présent exposé vise ainsi à répondre au moins partiellement à ces problématiques.

### Exposé de l'invention

A cet effet, le présent exposé concerne un système comprenant
- un premier groupe de moteurs, comprenant au moins un moteur hydraulique,
- un second groupe de moteurs, comprenant au moins un moteur hydraulique,
- un groupe d'alimentation, adapté pour délivrer une pression et alimenter en parallèle le premier groupe de moteurs et le second groupe de moteurs, de manière à définir une alimentation et un refoulement de fluide pour chacun desdits premier groupe de moteurs et second groupe de moteurs,

ledit système comprenant un bloc de régulation adapté pour former une restriction variable sur l'admission de l'un desdits premier groupe de moteurs et second groupe de moteurs, et une restriction variable sur le refoulement de l'autre desdits premier groupe de moteurs et second groupe de moteurs,
ledit système étant caractérisé en ce qu'il comprend
un capteur adapté pour mesurer un régime de fonctionnement de l'un des moteurs hydrauliques de l'un desdits premier groupe de moteurs et second groupe de moteurs,
un contrôleur adapté pour, en fonction de la mesure réalisée par ledit capteur, déterminer le régime de fonctionnement dudit moteur hydraulique desdits premier groupe de moteurs et second groupe de moteurs, et pour piloter le bloc de régulation en fonction d'une consigne de manière à contrôler le régime de fonctionnement des moteurs hydrauliques du premier groupe de moteurs (M1) et le régime de fonctionnement des moteurs hydrauliques du second groupe de moteurs.

Selon un exemple :
le groupe d'alimentation comprend un premier orifice et un second orifice,
le premier groupe de moteurs comprend un premier orifice et un second orifice, le second groupe de moteurs comprend un premier orifice et un second orifice, le premier orifice du groupe d'alimentation est relié au premier orifice du premier groupe de moteurs via le bloc de régulation, et est relié au premier orifice du second groupe de moteurs indépendamment du bloc de régulation,
le second orifice du groupe d'alimentation est relié au second orifice du second groupe de moteurs via le bloc de régulation, et est relié au second orifice du premier groupe de moteurs indépendamment du bloc de régulation.

Selon un exemple, le bloc de régulation comprend :
une première valve de contrôle, reliée au premier orifice du groupe d'alimentation et au premier orifice du premier groupe de moteurs,
une seconde valve de contrôle, reliée au second orifice du groupe d'alimentation et au second orifice du second groupe de moteurs.

Le bloc de régulation comprend typiquement
une première valve de pilotage, adapté pour piloter la première valve de contrôle, de manière à appliquer une pression de pilotage à la première valve de contrôle, la première valve de contrôle étant configurée de manière à être fermée en l'absence de pression de pilotage,
une seconde valve de pilotage, adaptée pour piloter la seconde valve de contrôle, de manière à appliquer une pression de pilotage à la seconde valve de contrôle, la seconde valve de contrôle étant configurée de manière à être fermée en l'absence de pression de pilotage.

Selon un exemple, le groupe d'alimentation comprend une pompe hydraulique à cylindrée fixe entrainée en rotation par un moteur primaire électrique.

Le présent exposé concerne également un véhicule comprenant un système tel que défini précédemment, ledit véhicule comprenant trois organes de déplacement, dans lequel le premier groupe de moteurs comprend deux moteurs hydrauliques, et dans lequel le second groupe de moteurs comprend un unique moteur hydraulique, chacun desdits moteurs hydrauliques étant couplé à l'un desdits organes de déplacement du véhicule, l'organe de déplacement couplé au moteur hydraulique du second groupe de moteurs étant un organe de déplacement directeur du véhicule.

Le présent exposé concerne en outre un procédé de pilotage d'un système comprenant un premier groupe de moteurs, comprenant au moins un moteur hydraulique, un second groupe de moteurs, comprenant au moins un moteur hydraulique, un groupe d'alimentation, adapté pour délivrer une pression et alimenter en parallèle le premier groupe de moteurs et le second groupe de moteurs, de manière à définir une alimentation et un refoulement de fluide pour chacun desdits premier groupe de moteurs et second groupe de moteurs, et un bloc de régulation,
dans lequel on pilote le bloc de régulation de manière à définir une restriction variable sur l'admission de l'un desdits premier groupe de moteurs le second groupe de moteurs, et une restriction variable sur le refoulement de l'autre desdits premier groupe de moteurs et second groupe de moteurs,
caractérisé en ce que
on définit une consigne de fonctionnement,
on mesure un régime de fonctionnement de l'un des moteurs hydrauliques de l'un desdits premier groupe de moteurs et second groupe de moteurs au moyen d'un capteur,
on détermine en fonction de la mesure réalisée par ledit capteur le régime de fonctionnement dudit moteur hydraulique desdits premier groupe de moteurs et second groupe de moteurs, et
en fonction de la consigne de fonctionnement et du régime de fonctionnement des moteurs hydrauliques, on pilote le bloc de régulation de manière à contrôler le régime de fonctionnement des moteurs hydrauliques du premier groupe de moteurs et le régime de fonctionnement des moteurs hydrauliques du second groupe de moteurs.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente schématiquement un système selon un aspect de l'invention.
[Fig. 2] La figure 2 présente une variante de la figure 1.

Sur l'ensemble des figures, les éléments en commun sont repérés par des références numériques identiques.

### Description des modes de réalisation

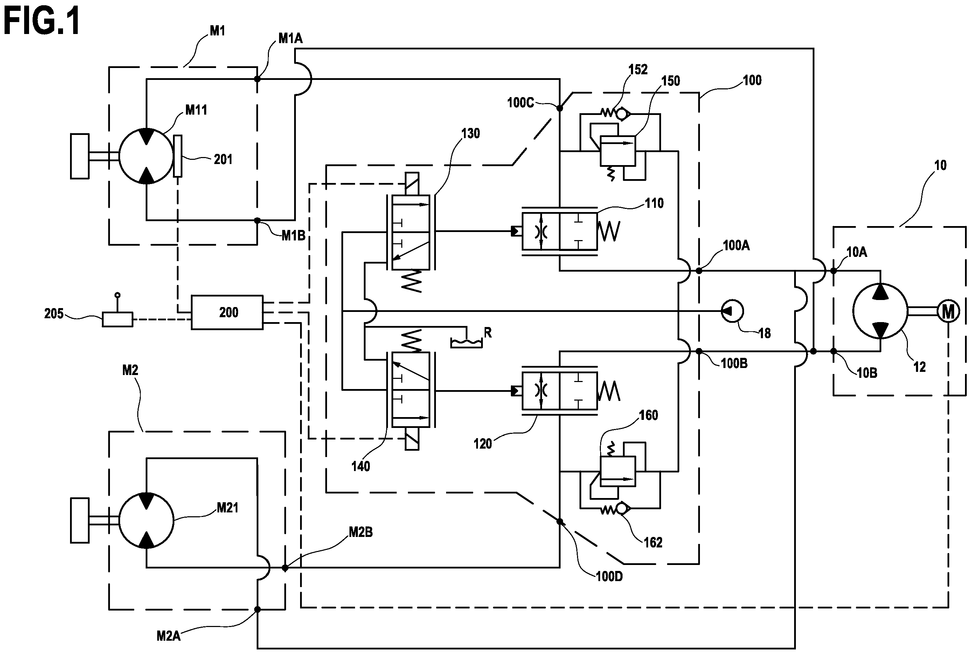

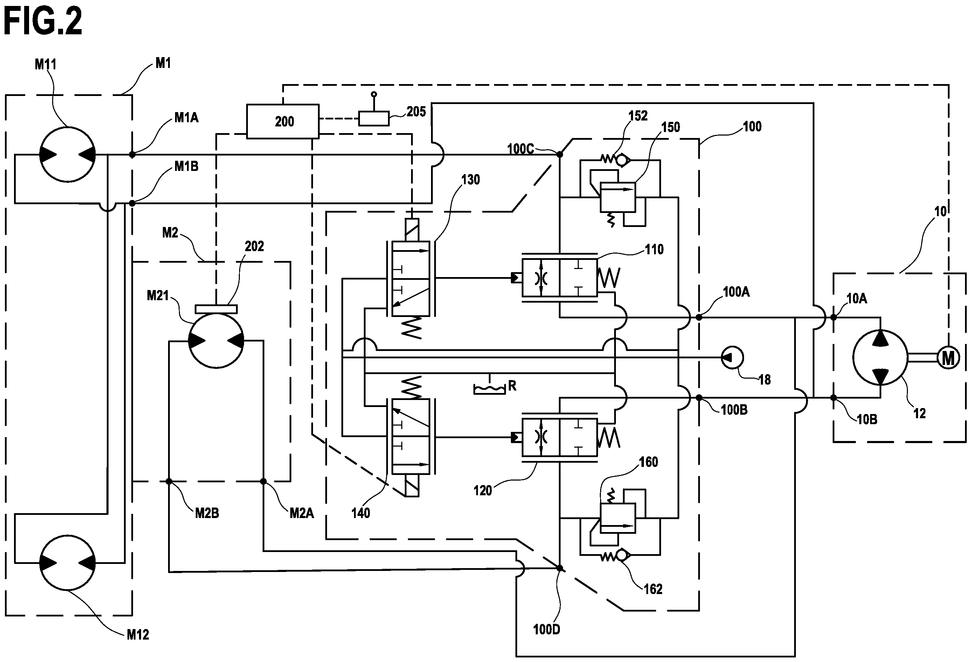

La figure 1 présente un exemple de réalisation d'un système selon un aspect du présent exposé. La figure 2 présente une variante de la figure 1, dont les différences seront mentionnées.

On représente sur ces figures un circuit comprenant un premier groupe de moteurs M1, un second groupe de moteurs M2, un groupe d'alimentation 10 et un bloc de régulation 100.

Le premier groupe de moteurs M1 comprend au moins un moteur hydraulique, typiquement adapté pour entrainer un organe d'un véhicule tel qu'un organe de déplacement qui peut être un organe directeur, par exemple une roue, un rouleau ou des chenilles. Dans l'exemple illustré sur la figure 1, le premier groupe de moteurs M1 comprend un moteur hydraulique M11. Dans l'exemple illustré sur la figure 2, le premier groupe de moteurs M1 comprend deux moteurs hydrauliques M11 et M12 montés en parallèle. On comprend cependant que ces modes de réalisation ne sont pas limitatifs.

Le second groupe de moteurs M2 comprend au moins un moteur hydraulique typiquement adapté pour entrainer un organe d'un véhicule tel qu'un organe de déplacement, par exemple une roue, un rouleau ou des chenilles, qui peut être un organe directeur, par exemple une roue directrice. Dans l'exemple illustré sur les figures 1 et 2, le second groupe de moteurs M2 comprend un moteur hydraulique M21.

Le groupe d'alimentation 10 tel que représenté comprend une pompe hydraulique 12 couplée à un moteur primaire M adapté pour entrainer la pompe hydraulique 12 en rotation. La pompe hydraulique 12 est typiquement une pompe hydraulique à cylindrée fixe ou une pompe hydraulique à cylindrée variable. Le moteur primaire M est par exemple un moteur électrique ou un moteur thermique.

Le groupe d'alimentation 10 est adapté de manière à fournir une pression au premier groupe de moteurs M1 et au second groupe de moteurs M2 afin qu'ils entrainent des organes d'un véhicule, d'un appareil ou d'un engin en rotation, par exemple pour une transmission principale ou une transmission d'assistance.

Le système comprend également une pompe de gavage 18, qui peut être intégrée oui indépendante du groupe d'alimentation 10.

Le bloc de régulation 100 est positionné entre le groupe d'alimentation 10 d'une part, et le premier groupe de moteurs M1 et le second groupe de moteurs M2 d'autre part.

Le bloc de régulation 100 tel que présenté comprend une première valve de contrôle 110, une seconde valve de contrôle 120, une première valve de pilotage 130, une seconde valve de pilotage 140.

La première valve de contrôle 110 est une valve proportionnelle reliée au groupe d'alimentation 10 d'une part, et au premier groupe de moteurs M1 d'autre part. La première valve de contrôle 110 est par défaut non passante. Elle est pilotée de manière à définir une restriction variable. La première valve de contrôle 110 est ainsi typiquement pilotée pour varier depuis une configuration où elle n'est pas passante jusqu'à une configuration dans laquelle elle est passante en formant une restriction minimale ou nulle.

Dans l'exemple illustré, la première valve de contrôle 110 est pilotée au moyen de la première valve de pilotage 130, qui est une électrovanne proportionnelle à commande électrique, adaptée pour piloter la première valve de contrôle 110 via la pression délivrée par la pompe de gavage 18. On comprend qu'en fonction du circuit du véhicule, la pression de pilotage peut être générée par différents moyens, reliés directement ou indirectement à la pompe de gavage 18, ou utiliser d'autres sources de pression dédiées.

La seconde valve de contrôle 120 est une valve proportionnelle reliée au groupe d'alimentation 10 d'une part, et au second groupe de moteurs M2 d'autre part. La seconde valve de contrôle 120 est par défaut non passante. Elle est pilotée de manière à définir une restriction variable. La seconde valve de contrôle 120 est ainsi typiquement pilotée pour varier depuis une configuration où elle n'est pas passante jusqu'à une configuration dans laquelle elle est passante sans former de restriction.

La seconde valve de contrôle 120 est pilotée au moyen de la seconde valve de pilotage 140, qui est une électrovanne proportionnelle à commande électrique, adaptée pour piloter la seconde valve de contrôle 120 via la pression délivrée par la pompe de gavage 18.

Le groupe d'alimentation 10 présente un premier orifice 10A et un second orifice 10B définissant une admission et un refoulement de fluide, et donc une conduite que l'on qualifie de haute pression et une conduite que l'on qualifie de basse pression pour le circuit hydraulique. A des fins d'illustration, on considèrera ici que le premier orifice 10A est le refoulement du groupe d'alimentation 10, et que le second orifice 10B est l'admission du groupe d'alimentation 10. Le premier orifice 10A définit ainsi une branche haute pression ou HP du circuit hydraulique, et le second orifice 10B définit une branche basse pression ou BP du circuit hydraulique. On comprend cependant bien que ce mode de fonctionnement n'est pas limitatif, et que le système est réversible.

Le bloc de régulation 100 présente un premier orifice 100A, un deuxième orifice 100B, un troisième orifice 100C et un quatrième orifice 100D. Le premier orifice 100A du bloc de régulation 100 est relié au premier orifice 10A du groupe d'alimentation 10. Le deuxième orifice 100B du bloc de régulation 100 est relié au second orifice 10B du groupe d'alimentation 10.

Au sein du bloc de régulation 100, la première valve de contrôle 110 est interposée entre le premier orifice 100A et le troisième orifice 100C, et la seconde valve de contrôle 120 est interposée entre le deuxième orifice 100B et le quatrième orifice 100D.

Le premier groupe de moteurs M1 comprend un premier orifice M1A et un second orifice M1B. Le premier orifice M1A est relié au troisième orifice 100C du bloc de régulation 100. Le second orifice M1B est relié au second orifice 10B du groupe d'alimentation 10, en parallèle du bloc de régulation 100, c'est-à-dire sans passer par le bloc de régulation 100.

Le second groupe de moteurs M2 comprend un premier orifice M2A et un second orifice M2B. Le premier orifice M2A est relié au premier orifice 10A du groupe d'alimentation 10, en parallèle du bloc de régulation 100, c'est-à-dire sans passer par le bloc de régulation 100. Le second orifice M2B est relié au quatrième orifice 100D du bloc de régulation 100.

Une telle configuration permet ainsi d'assurer que l'un des groupes de moteurs est relié au groupe d'alimentation 10 via le bloc de régulation 10 par son alimentation, tandis que l'autre des groupes de moteurs est relié au groupe d'alimentation 10 via le bloc de régulation 10 par son refoulement. On peut ainsi piloter la pression aux bornes de chaque groupe de moteurs en faisant varier les pertes de charge sur l'alimentation ou sur le refoulement de chacun desdits groupes de moteurs, sans nécessiter un dédoublement des composants.

En effet, en considérant ici que le premier orifice 10A du groupe d'alimentation 10 est l'orifice de refoulement du groupe d'alimentation 10, alors on peut piloter la première valve de contrôle 110 pour faire varier la pression à l'admission du premier groupe de moteurs M1, et on peut piloter la seconde valve de contrôle 120 pour faire varier la pression au refoulement du second groupe de moteurs M2. Le pilotage permet de moduler la différence de pression aux orifices des groupes de moteurs, et ainsi de modifier le couple délivré. On comprend que dans le sens de fonctionnement inverse, c'est-à-dire si le premier orifice 10A du groupe d'alimentation 10 est l'orifice d'admission du groupe d'alimentation 10, le fonctionnement est alors similaire. On peut alors piloter la première valve de contrôle 110 pour faire varier la pression au refoulement du premier groupe de moteurs M1, et on peut piloter la seconde valve de contrôle 120 pour faire varier la pression à l'admission du second groupe de moteurs M2.

Le système proposé permet ainsi de moduler l'écart de pression aux orifices des groupes de moteurs M1 et M2 avec un nombre réduit de composants. Par ailleurs, comme on le comprend à la lecture de ce qui précède, seule la moitié du débit passe par les valves de contrôle 110 et 120. L'effet en termes de pertes de charge sur le système est ainsi réduit, ce qui permet d'éviter de dégrader les performances du système lorsque la génération de pertes de charge n'est pas souhaitée.

Une telle modulation de l'écart de pression aux orifices des groupes de moteurs M1 et M2 permet notamment de réaliser une fonction de frein moteur, en générant un couple résistant du fait des pertes de charge créées dans le circuit hydraulique.

Le pilotage est typiquement réalisé via un contrôleur 200, qui commande la première valve de pilotage 130 et la seconde valve de pilotage 140, par exemple via des actionneurs électriques. Le contrôleur 200 comprend par exemple un calculateur, ou tout autre moyen adapté. On peut le désigner par l'acronyme ECU communément utilisé pour désigner une unité de contrôle électronique.

Dans l'exemple illustré, le bloc de régulation 100 comprend également une première soupape tarée 150 montée en parallèle d'un premier clapet anti retour taré 152, et une second soupape tarée 160 montée en parallèle d'un second clapet anti retour taré 162, ces éléments étant reliés à la pompe de gavage 18 afin d'assurer un gavage en pression du circuit hydraulique. Dans les exemples illustrés, le bloc de régulation 100 remplit donc également la fonction de circuit de gavage. Cette fonction de gavage peut être réalisée par un circuit de gavage indépendant du bloc de régulation 100.

En plus de la fonction de frein moteur indiquée précédemment, le système tel que proposé permet de réaliser une fonction d'anti-patinage ou de contrôle de traction comme on le décrit ci-après.

Le système tel que proposé comprend un capteur de vitesse 201, adapté pour mesurer la vitesse de rotation d'un organe tournant. Le contrôleur 200 est relié au capteur de vitesse 201 de manière à recevoir l'information de vitesse de rotation ainsi mesurée. On comprend que le capteur peut également être un capteur de pression ou de débit, ou plus généralement un capteur adapté pour fournir une information relative au régime de fonctionnement de l'organe considéré.

Dans l'exemple illustré sur la figure 1, le capteur de vitesse 201 est positionné de manière à mesurer la vitesse de rotation du moteur hydraulique M11 du premier groupe de moteurs M1.

Dans la mesure où le premier groupe de moteurs M1 et le second groupe de moteurs M2 sont alimentés en parallèle par le groupe d'alimentation 10, on comprend que les vitesses de rotation des moteurs hydrauliques du premier groupe de moteurs M1 et du second groupe de moteurs M2 sont liées, la pression délivrée par le groupe d'alimentation 10 étant répartie entre le premier groupe de moteurs M1 et le second groupe de moteurs M2.

Dans une situation de roulement, les organes de roulement entrainés par les différents moteurs hydrauliques tournent à une même vitesse, correspondant à une consigne de vitesse du système, par exemple à une consigne de vitesse du véhicule. La pression délivrée par le groupe d'alimentation 10 est ainsi répartie de manière sensiblement identique entre le premier groupe de moteurs M1 et le second groupe de moteurs M2.

En situation de patinage, l'un des organes de roulement va présenter une vitesse de rotation anormalement élevée. Le moteur hydraulique entrainant cet organe en rotation va donc tourner à une vitesse supérieure à une consigne de vitesse, et va donc entrainer une répartition non équitable du débit délivrée par le groupe d'alimentation 10 entre le premier groupe de moteurs M1 et le second groupe de moteurs M2. Dans une situation de patinage ou de perte de traction, différents dysfonctionnements apparaissent. En général la pression n'augmente plus, même si on demande plus de couple, et le véhicule ralentit. La pression ne chute pas, mais l'écart de vitesse entres roues augmente. Il est possible aussi de constater une chute de pression aux bornes de l'autre groupe moteur, la chute de pression n'étant pas nécessairement significative. De manière générale, le groupe moteur qui est en situation de patinage va consommer trop de débit et faire chuter la pression.

Le système tel que proposé permet de réaliser une détection d'une situation de patinage et ainsi un contrôle de traction au moyen d'un unique capteur de vitesse, ou de pression.

Le contrôleur 200 tel que proposé est configuré de manière à recevoir une information relative à la vitesse de rotation du moteur primaire M. Dans le cas où le moteur primaire M est un moteur électrique et où la pompe hydraulique 12 est une pompe à cylindrée fixe, la vitesse de rotation du moteur primaire M détermine alors la vitesse de rotation visée pour les organes, ou vitesse cible, et ainsi une consigne de vitesse Vc pour la pompe hydraulique 12, et une consigne de vitesse V1c pour les moteurs hydrauliques du premier groupe de moteurs M1 et une consigne de vitesse V2c pour les moteurs hydrauliques du second groupe de moteurs M2. Si un pilotage autre qu'en vitesse est choisi, des consignes d'un autre régime sont choisies, par exemple une consigne de pression, ou une consigne de débit, le fonctionnement étant alors similaire.

La consigne de vitesse Vc est une consigne globale pour l'ensemble des groupes de moteurs hydrauliques, ici M1 et M2, alimentés par la pompe hydraulique 12. Cela signifie que le débit fonction de la cylindrée et de la vitesse de rotation de la pompe hydraulique 12, si il était partagé vers les groupes de moteurs M1 et M2 dans une configuration normale, c'est-à-dire sans situation de patinage, ferait que les moteurs hydrauliques des groupes M1 et M2 tourneraient à la vitesse cible respectivement V1c et V2c.

On comprend cependant qu'en fonction de divers paramètres tels que la taille des roues, et de la cylindrée des moteurs M11 et M21, la vitesse cible des moteurs n'est pas égale à la vitesse de la pompe, car il faut tenir compte des ratios de cylindrée entre la pompe hydraulique et les différents moteurs hydrauliques, et également de la taille de roues. En effet, pour une pompe hydraulique présentant une vitesse de consigne Vc, les moteurs hydrauliques alimentés reçoivent globalement un débit qui correspond à un déplacement à la vitesse de déplacement souhaitée pour le véhicule ; et pour cette vitesse de déplacement, la vitesse cible de rotation de chaque moteur hydraulique est définie. En variante, le contrôleur 200 peut recevoir une information supplémentaire relative à la cylindrée de la pompe hydraulique 12 dans le cas où la pompe hydraulique 12 est une pompe hydraulique à cylindrée variable, ce qui permet de connaitre le débit de la pompe hydraulique 12, comme grandeur représentative du régime de la pompe hydraulique 12.

Sur le circuit représenté, le contrôleur 200 est relié au moteur primaire M de manière à connaitre une information de vitesse de la pompe 12. Cependant, le contrôleur 200 peut aussi être l'unité qui assure le pilotage du moteur primaire M, et peut donc par voie de conséquence en connaitre la vitesse, qui permet de déduire la vitesse de la pompe 12. Sur les figures, seule une liaison de type pilotage ou acquisition de donnée est représentée entre le calculateur 200 et le moteur primaire M. Les figures ne représentent pas les éléments assurant l'alimentation de puissance et de contrôle du moteur M. Le contrôleur 200 peut aussi recevoir une consigne de vitesse de conduite du véhicule, par une interface homme machine, par exemple par un joystick, une manette, ou tout élément de contrôle 205 adapté. Le contrôleur 200 peut aussi être une entité de pilotage automatique d'une machine ou d'un véhicule sans conducteur. Dans tous les cas de figure, le contrôleur 200 peut connaitre la vitesse de consigne Vc représentative du régime de fonctionnement de la pompe hydraulique 12, soit directement, soit indirectement.

Le contrôleur 200 reçoit également une information relative à vitesse de rotation de l'un des moteurs hydrauliques, comme indiqué précédemment. Dans l'exemple illustré sur la figure 1, le contrôleur 200 reçoit une information relative à vitesse de rotation V1 du moteur hydraulique M11 du premier groupe de moteurs M1.

Le contrôleur 200 compare alors les valeurs mesurées, les comparaisons étant typiquement réalisées à une marge de tolérance près.

La consigne de vitesse V1c pour le moteur hydraulique M11 est générée par calcul en fonction de données disponibles au niveau du calculateur 200, par exemple, une mesure de vitesse sur le moteur primaire M réalisant l'entrainement de la pompe hydraulique 12, une mesure de vitesse au niveau de la pompe hydraulique 12, ou a partir d'une consigne de vitesse générée par un utilisateur au moyen d'une interface homme-machine (par exemple une pédale, une manette ou un levier), ou à partir des mesures de la vitesse et de la cylindrée de la pompe hydraulique 12 pour les architectures utilisant une pompe à cylindrée variable.

Si V1 = V1c, le contrôleur 200 détermine alors que le fonctionnement est normal, c'est-à-dire qu'il n'y a pas de situation de patinage. On note que le contrôleur 200 peut également ici prendre en compte une consigne directionnelle, qui peut conduire à une différence de vitesse de rotation entre différents organes de déplacement d'un véhicule, en particulier dans une situation de virage, ou les vitesses des roues sont normalement différentes, même sans patinage.

Dans le cas où V1 > V1c, le contrôleur 200 détermine que le moteur hydraulique M11 est en situation de patinage. Ce dernier présente en effet une vitesse de rotation trop élevée. Le contrôleur 200 pilote alors le bloc de régulation 100 de manière à réduire la pression à l'admission ou au refoulement du moteur hydraulique M11 comme déjà décrit précédemment, en faisant varier la restriction définie par la première valve de contrôle 110, et permet ainsi de réduire la vitesse de rotation du moteur hydraulique M11 jusqu'à obtenir V1 = V1c.

Dans la situation inverse, c'est-à-dire V1 < V1c, le contrôleur 200 détermine que le moteur hydraulique M11 présente une vitesse de rotation trop faible. Par conséquent, le contrôleur 200 en déduit que le moteur hydraulique M21 présente une vitesse de rotation trop élevée, et est en situation de patinage. Le contrôleur 200 pilote alors le bloc de régulation 100 de manière à réduire la pression à l'admission ou au refoulement du moteur hydraulique M21 comme déjà décrit précédemment, en faisant varier la restriction définie par la seconde valve de contrôle 120, et permet ainsi de réduire la vitesse de rotation du moteur hydraulique M21 ce qui permet ainsi d'augmenter la vitesse de rotation du moteur hydraulique M11 jusqu'à obtenir V1 = V1c.

De cette manière, on peut déduire la vitesse du moteur M21, connaissant la vitesse du moteur M11 et la vitesse de la pompe hydraulique 12, dans le cas où les moteurs hydrauliques M11 et M21 et la pompe hydraulique 12 sont à cylindrée fixe. Dans le cas où l'un des composants est à cylindrée variable, il faut connaitre l'information relative à la cylindrée et à la vitesse du composant considéré, ce qui est équivalent à connaître une information de débit.

D'une manière générale, l'information de vitesse, ou l'information de vitesse et de cylindrée, ou une information de débit suivant le type de l'appareil hydraulique, moteur ou pompe, permet de définir le régime de fonctionnement. On pilote ensuite le bloc de régulation pour moduler le régime de fonctionnement des différents moteurs hydrauliques, afin d'obtenir le régime de fonctionnement souhaité pour lesdits moteurs hydrauliques.

Par exemple, dans le cas d'utilisation de moteurs à came a changement de cylindrée, pour chaque cylindrée, on peut définir un régime cible, par exemple un débit cible, ou une vitesse cible. De la même manière on peut définir un régime pour un moteur à cylindrée continument variable.

La fonction de contrôle de traction (ou anti-patinage) est à présent décrite en considérant le mode de réalisation présenté sur la figure 2. Dans ce mode de réalisation, le contrôleur 200 est associé à un capteur de vitesse 202 adapté pour mesurer la vitesse de rotation V2 du moteur hydraulique M21 du second groupe de moteurs M2.

Le fonctionnement est ici similaire au fonctionnement déjà décrit précédemment en référence à la figure 1. Le contrôleur 200 détermine une consigne de vitesse Vc pour la pompe hydraulique 12, et une consigne de vitesse V1c pour les moteurs hydrauliques du premier groupe de moteurs M1 et une consigne de vitesse V2c pour les moteurs hydrauliques du second groupe de moteurs M2. La vitesse de rotation V2 mesurée par le capteur de vitesse 202 permet ainsi de définir si le moteur hydraulique M21 est en situation de patinage (ou de perte de traction), si l'un des moteurs hydrauliques M11 et/ou M12 du premier groupe de moteurs M1 est en situation de patinage (ou de perte de traction), ou si le système présente un fonctionnement normal.

Plus précisément, si V2 = V2c, alors le système est considéré comme présentant un fonctionnement normal.

Si V2 > V2c, le contrôleur 200 détermine que le moteur hydraulique M21 est en situation de patinage. Ce dernier présente en effet une vitesse de rotation trop élevée. Le contrôleur 200 pilote alors le bloc de régulation 100 de manière à réduire la pression à l'admission ou au refoulement du moteur hydraulique M21 comme déjà décrit précédemment, en faisant varier la restriction définie par la second valve de contrôle 120, et permet ainsi de réduire la vitesse de rotation du moteur hydraulique M21 jusqu'à obtenir V2 = V2c.

Si V2 < V2c, le contrôleur 200 détermine que le moteur hydraulique M21 présente une vitesse de rotation trop faible. Le contrôleur 200 détermine ainsi que l'un des moteurs hydrauliques M1 et/ou M12 est en situation de patinage et présente une vitesse de rotation trop élevée. Le contrôleur 200 pilote alors le bloc de régulation 100 de manière à réduire la pression à l'admission ou au refoulement du premier groupe de moteurs M1 comme déjà décrit précédemment, en faisant varier la restriction définie par la second valve de contrôle 120, et permet ainsi de réduire la vitesse de rotation du moteur hydraulique M21 jusqu'à obtenir V2 = V2c.

On note ici que le contrôleur 200 réalise un pilotage assurant un anti-patinage ou contrôle de traction à l'aide de la mesure de la vitesse de rotation d'un seul moteur hydraulique parmi les moteurs hydrauliques du premier groupe de moteurs M1 et du second groupe de moteurs M2. En effet, compte tenu de la structure du système tel que proposé et de la structure du bloc de régulation 100.

Le système proposé permet ainsi de réaliser une fonction de contrôle de traction (ou anti-patinage) en employant un unique capteur de vitesse et le bloc de régulation 100 tel que décrit précédemment. Le système proposé compare ainsi la vitesse de rotation, ou plus généralement le régime de fonctionnement de l'un des moteurs hydrauliques avec une vitesse de rotation de consigne ou un régime de fonctionnement de consigne, et pilote le bloc de régulation en fonction du rapport entre la vitesse de rotation ou le régime de fonctionnement mesuré, et la consigne, de manière à réguler si nécessaire la pression à l'admission ou au refoulement de l'un ou de l'autre des groupes de moteurs M1 ou M2. L'encombrement et le coût du système tel que proposé sont ainsi fortement réduits par rapport à des systèmes conventionnels qui requièrent une multiplication des capteurs et des valves.

Le système proposé permet ainsi de mutualiser les fonctions de frein moteur et de contrôle de traction au moyen d'un nombre réduit de composants, et en ayant un impact minimisé sur le système lorsque le bloc de régulation n'est pas sollicité.

Le système tel que proposé trouve par exemple une application particulière pour des engins à trois roues, tels que des chariots élévateurs. Pour de tels engins, les fortes variations de charge entrainent des risques relativement élevés de patinage, et le contrôle de traction tel que proposé est ainsi particulièrement avantageux.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système hydraulique comprenant
- un premier groupe de moteurs (M1), comprenant au moins un moteur hydraulique (M11),
- un second groupe de moteurs (M2), comprenant au moins un moteur hydraulique (M21),
- un groupe d'alimentation (10), adapté pour délivrer une pression et alimenter en parallèle le premier groupe de moteurs (M1) et le second groupe de moteurs (M2), de manière à définir une alimentation et un refoulement de fluide pour chacun desdits premier groupe de moteurs (M1) et second groupe de moteurs (M2),
ledit système comprenant un bloc de régulation (100) adapté pour former une restriction variable sur l'admission de l'un desdits premier groupe de moteurs (M1) et second groupe de moteurs (M2), et une restriction variable sur le refoulement de l'autre desdits premier groupe de moteurs (M1) et second groupe de moteurs (M2),
ledit système étant **caractérisé en ce qu'**il comprend un capteur (201, 202) adapté pour mesurer un régime de fonctionnement de l'un des moteurs hydrauliques de l'un desdits premier groupe de moteurs (M1) et second groupe de moteurs (M2),
un contrôleur (200) adapté pour, en fonction de la mesure réalisée par ledit capteur (201, 202), déterminer le régime de fonctionnement dudit moteur hydraulique desdits premier groupe de moteurs (M1) et second groupe de moteurs (M2), et pour piloter le bloc de régulation (100) en fonction d'une consigne de manière à contrôler le régime de fonctionnement des moteurs hydrauliques du premier groupe de moteurs (M1) et le régime de fonctionnement des moteurs hydrauliques du second groupe de moteurs (M2).

2. Système selon la revendication 1, dans lequel :
le groupe d'alimentation (10) comprend un premier orifice (10A) et un second orifice (10B),
le premier groupe de moteurs (M1) comprend un premier orifice (M1A) et un second orifice (M1B),
le second groupe de moteurs (M2) comprend un premier orifice (M2A) et un second orifice (M2B),
le premier orifice (10A) du groupe d'alimentation (10) est relié au premier orifice (M1A) du premier groupe de moteurs (M1) via le bloc de régulation (100), et est relié au premier orifice (M2A) du second groupe de moteurs (M2) indépendamment du bloc de régulation (100),
le second orifice (10B) du groupe d'alimentation (10) est relié au second orifice (M2B) du second groupe de moteurs (M2) via le bloc de régulation (100), et est relié au second orifice (M1B) du premier groupe de moteurs (M1) indépendamment du bloc de régulation (100).

3. Système selon la revendication 2, dans lequel le bloc de régulation (100) comprend :
une première valve de contrôle (110), reliée au premier orifice (10A) du groupe d'alimentation (10) et au premier orifice (M1A) du premier groupe de moteurs (M1),
une seconde valve de contrôle (120), reliée au second orifice (10B) du groupe d'alimentation (10) et au second orifice (M2B) du second groupe de moteurs (M2).

4. Système selon la revendication 3, dans lequel le bloc de régulation (100) comprend
une première valve de pilotage (130), adapté pour piloter la première valve de contrôle (110), de manière à appliquer une pression de pilotage à la première valve de contrôle (110), la première valve de contrôle (110) étant configurée de manière à être fermée en l'absence de pression de pilotage, une seconde valve de pilotage (140), adaptée pour piloter la seconde valve de contrôle (120), de manière à appliquer une pression de pilotage à la seconde valve de contrôle (120), la seconde valve de contrôle (120) étant configurée de manière à être fermée en l'absence de pression de pilotage.

5. Système selon l'une des revendications 1 à 4, dans lequel le groupe d'alimentation (10) comprend une pompe hydraulique (12) à cylindrée fixe entrainée en rotation par un moteur primaire (M) électrique.

6. Véhicule comprenant un système selon l'une des revendications 1 à 5, comprenant trois organes de déplacement, dans lequel le premier groupe de moteurs (M1) comprend deux moteurs hydrauliques (M11, M12), et dans lequel le second groupe de moteurs (M2) comprend un unique moteur hydraulique (M21), chacun desdits moteurs hydrauliques (M11, M12, M21) étant couplé à l'un desdits organes de déplacement du véhicule, l'organe de déplacement couplé au moteur hydraulique (M21) du second groupe de moteurs (M2) étant un organe de déplacement directeur du véhicule.

7. Procédé de pilotage d'un système comprenant un premier groupe de moteurs (M1), comprenant au moins un moteur hydraulique, un second groupe de moteurs (M2), comprenant au moins un moteur hydraulique, un groupe d'alimentation (10), adapté pour délivrer une pression et alimenter en parallèle le premier groupe de moteurs (M1) et le second groupe de moteurs (M2), de manière à définir une alimentation et un refoulement de fluide pour chacun desdits premier groupe de moteurs (M1) et second groupe de moteurs (M2), et un bloc de régulation (100),
dans lequel on pilote le bloc de régulation (100) de manière à définir une restriction variable sur l'admission de l'un desdits premier groupe de moteurs (M1) le second groupe de moteurs (M2), et une restriction variable sur le refoulement de l'autre desdits premier groupe de moteurs (M1) et second groupe de moteurs (M2)
**caractérisé en ce que**
on définit une consigne de fonctionnement,
on mesure un régime de fonctionnement de l'un des moteurs hydrauliques de l'un desdits premier groupe de moteurs (M1) et second groupe de moteurs (M2) au moyen d'un capteur (201, 202),
on détermine en fonction de la mesure réalisée par ledit capteur (201, 202) le régime de fonctionnement dudit moteur hydraulique hydrauliques de l'un desdits premier groupe de moteurs (M1) et second groupe de moteurs (M2), et
en fonction de la consigne de fonctionnement et du régime de fonctionnement des moteurs hydrauliques, on pilote le bloc de régulation (100) de manière à contrôler le régime de fonctionnement des moteurs hydrauliques du premier groupe de moteurs (M1) et le régime de fonctionnement des moteurs hydrauliques du second groupe de moteurs (M2).

## Patentansprüche

1. Hydrauliksystem, umfassend
- eine erste Motorgruppe (M1), die mindestens einen Hydraulikmotor (M11) umfasst,
- eine zweite Motorgruppe (M2), die mindestens einen Hydraulikmotor (M21) umfasst,
- eine Versorgungsgruppe (10), die dazu geeignet ist, einen Druck zu liefern und die erste Motorgruppe (M1) und die zweite Motorgruppe (M2) parallel zu versorgen, um eine Versorgung und eine Abgabe von Fluid für jede von der ersten Motorgruppe (M1) und der zweiten Motorgruppe (M2) zu definieren,
wobei das System einen Regelblock (100) umfasst, der geeignet ist, eine variable Drosselung auf den Einlass einer von der ersten Motorgruppe (M1) und der zweiten Motorgruppe (M2) und eine variable Drosselung auf den Auslass der anderen von der ersten Motorgruppe (M1) und der zweiten Motorgruppe (M2) zu bilden,
wobei das System **dadurch gekennzeichnet ist, dass** es umfasst
einen Sensor (201, 202), der geeignet ist, eine Betriebsdrehzahl eines der Hydraulikmotoren einer von der ersten Motorgruppe (M1) und der zweiten Motorgruppe (M2) zu messen,
einen Regler (200), der geeignet ist, in Abhängigkeit von der von dem Sensor (201, 202) durchgeführten Messung die Betriebsdrehzahl des Hydraulikmotors der ersten Motorgruppe (M1) und der zweiten Motorgruppe (M2) zu bestimmen und den Regelblock (100) in Abhängigkeit von einem Sollwert derart anzusteuern, dass die Betriebsdrehzahl der Hydraulikmotoren der ersten Motorgruppe (M1) und die Betriebsdrehzahl der Hydraulikmotoren der zweiten Motorgruppe (M2) geregelt werden.

2. System nach Anspruch 1, wobei:
die Versorgungsgruppe (10) eine erste Öffnung (10A) und eine zweite Öffnung (10B) umfasst,
die erste Motorgruppe (M1) eine erste Öffnung (M1A) und eine zweite Öffnung (M1B) umfasst,
die zweite Motorgruppe (M2) eine erste Öffnung (M2A) und eine zweite Öffnung (M2B) umfasst,
die erste Öffnung (10A) der Versorgungsgruppe (10) über den Regelblock (100) mit der ersten Öffnung (M1A) der ersten Motorgruppe (M1) verbunden ist und unabhängig von dem Regelblock (100) mit der ersten Öffnung (M2A) der zweiten Motorgruppe (M2) verbunden ist,
die zweite Öffnung (10B) der Versorgungsgruppe (10) über den Regelblock (100) mit der zweiten Öffnung (M2B) der zweiten Motorgruppe (M2) verbunden ist und unabhängig von dem Regelblock (100) mit der zweiten Öffnung (M1B) der ersten Motorgruppe (M1) verbunden ist.

3. System nach Anspruch 2, wobei der Regelblock (100) umfasst:
ein erstes Steuerventil (110), das mit der ersten Öffnung (10A) der Versorgungsgruppe (10) und der ersten Öffnung (M1A) der ersten Motorgruppe (M1) verbunden ist,
ein zweites Steuerventil (120), das mit der zweiten Öffnung (10B) der Versorgungsgruppe (10) und der zweiten Öffnung (M2B) der zweiten Motorgruppe (M2) verbunden ist.

4. System nach Anspruch 3, wobei der Steuerblock (100) umfasst
ein erstes Vorsteuerventil (130), das geeignet ist, das erste Steuerventil (110) derart anzusteuern, dass ein Vorsteuerdruck auf das erste Steuerventil (110) ausgeübt wird, wobei das erste Steuerventil (110) derart ausgelegt ist, dass es bei Abwesenheit des Vorsteuerdrucks geschlossen ist,
ein zweites Vorsteuerventil (140), das geeignet ist, das zweite Steuerventil (120) derart anzusteuern, dass ein Vorsteuerdruck auf das zweite Steuerventil (120) ausgeübt wird, wobei das zweite Steuerventil (120) derart ausgelegt ist, dass es bei Abwesenheit des Vorsteuerdrucks geschlossen ist.

5. System nach einem der Ansprüche 1 bis 4, wobei die Versorgungsgruppe (10) eine Hydraulikpumpe (12) mit festem Hubraum umfasst, die von einem elektrischen Primärmotor (M) rotatorisch angetrieben wird.

6. Fahrzeug, das ein System nach einem der Ansprüche 1 bis 5 umfasst, umfassend drei Fahrorgane, wobei die erste Motorengruppe (M1) zwei Hydraulikmotoren (M11, M12) umfasst und wobei die zweite Motorengruppe (M2) einen einzigen Hydraulikmotor (M21) umfasst, wobei jeder der Hydraulikmotoren (M11, M12, M21) mit einem der Fahrorgane des Fahrzeugs gekoppelt ist, wobei das mit dem Hydraulikmotor (M21) der zweiten Motorgruppe (M2) gekoppelte Fahrorgan ein lenkendes Fahrorgan des Fahrzeugs ist.

7. Verfahren zum Vorsteuern eines Systems, das eine erste Motorgruppe (M1), die mindestens einen Hydraulikmotor umfasst, eine zweite Motorgruppe (M2), die mindestens einen Hydraulikmotor umfasst, und eine Versorgungsgruppe (10) umfasst, die geeignet ist, einen Druck zu liefern und die erste Motorgruppe (M1) und die zweite Motorgruppe (M2) derart parallel zu versorgen, dass eine Versorgung und eine Abgabe von Fluid für jede von der ersten Motorgruppe (M1) und der zweiten Motorgruppe (M2) definiert wird, und einen Regelblock (100),
wobei der Regelblock (100) derart vorgesteuert wird, dass eine variable Drosselung auf den Einlass einer von der ersten Motorgruppe (M1) und der zweiten Motorgruppe (M2) und eine variable Drosselung auf den Auslass der anderen von der ersten Motorgruppe (M1) und der zweiten Motorgruppe (M2) definiert wird,
**dadurch gekennzeichnet, dass**
ein Betriebssollwert definiert wird,
eine Betriebsdrehzahl eines der Hydraulikmotoren von der ersten Motorgruppe (M1) und der zweiten Motorgruppe (M2) mittels eines Sensors (201, 202) gemessen wird,
in Abhängigkeit von der mittels des Sensors (201, 202) durchgeführten Messung die Betriebsdrehzahl des Hydraulikmotors von einer von der ersten Motorgruppe (M1) und der zweiten Motorgruppe (M2) bestimmt wird,
und
in Abhängigkeit von dem Betriebssollwert und der Betriebsdrehzahl der Hydraulikmotoren der Regelblock (100) derart vorgesteuert wird, dass die Betriebsdrehzahl der Hydraulikmotoren der ersten Motorgruppe (M1) und die Betriebsdrehzahl der Hydraulikmotoren der zweiten Motorgruppe (M2) geregelt werden.

## Claims

1. Hydraulic system comprising
- a first group of motors (M1), comprising at least one hydraulic motor (M11),
- a second group of motors (M2), comprising at least one hydraulic motor (M21),
- a power supply unit (10), suitable for delivering a pressure and supplying power in parallel to the first group of motors (M1) and to the second group of motors (M2), so as to define a power supply and a discharge of fluid for each of said first group of motors (M1) and second group of motors (M2),
said system comprising a control unit (100) suitable for forming a variable restriction on the intake of one of said first group of motors (M1) and said second group of motors (M2), and a variable restriction on the discharge of the other of said first group of motors (M1) and said second group of motors (M2),
said system being **characterized in that** same comprises:
a sensor (201, 202) suitable for measuring an operating speed of one of the hydraulic motors
of one of the said first group of motors (M1)
and second group of motors (M2),
a controller (200) suitable for determining, as a function of the measurement made by said sensor (201, 202), the operating speed of said hydraulic motor of said first group of motors (M1) and said second group of motors (M2), and to control the regulation unit (100) as a function of a setpoint so as to control the operating speed of the hydraulic motors of the first group of motors (M1) and the operating speed of the hydraulic motors of the second group of motors (M2).

2. The system according to claim 1, wherein:
the power supply connection (10) comprises a first port (10A) and a second port (10B),
the first group of motors (M1) comprises a first port (M1A) and a second port (M1B),
the second group of motors (M2) comprises a first port (M2A) and a second port (M2B),
the first port (10A) of the power supply unit (10) is connected to the first port (M1A) of the first group of motors (M1) via the control unit (100), and is connected to the first port (M2A) of the second group of motors (M2) independently of the control unit (100),
the second port (10B) of the power supply unit (10) is connected to the second port (M2B) of the second group of motors (M2) via the control unit (100) and is connected to the second port (M1B) of the first group of motors (M1) independently of the control unit (100).

3. The system according to claim 2, wherein the control unit (100) comprises:
a first control valve (110), connected to the first port (10A) of the power supply unit (10) and to the first port (M1A) of the first group of motors (M1),
a second control valve (120), connected to the second port (10B) of the power supply unit (10) and to the second port (M2B) of the second group of motors (M2).

4. The system according to claim 3, wherein the control unit (100) comprises
a first piloting valve (130), suitable for controlling the first control valve (110) to apply piloting pressure to the first control valve (110), the first control valve (110) being configured to be closed in the absence of a piloting pressure, a second piloting valve (140), suitable for controlling the second control valve (120), so as to apply piloting pressure to the second control valve (120), the second control valve (120) being configured to be closed in the absence of a piloting pressure.

5. The system according to one of claims 1 to 4, wherein the power supply unit (10) comprises a fixed displacement hydraulic pump (12) rotated by an electric primary motor (M).

6. A vehicle comprising a system according to one of claims 1 to 5, comprising three moving members, wherein the first group of motors (M1) comprises two hydraulic motors (M11, M12), and wherein the second group of motors (M2) comprises a single hydraulic motor (M21), each of said hydraulic motors (M11, M12, M21) being coupled to one of said moving members of the vehicle, the moving members coupled to the hydraulic motor (M21) of the second group of motors (N2) being a steering moving member of the vehicle.

7. A method of piloting a system comprising a first group of motors (M1), comprising at least one hydraulic motor, a second group of motors (M2), comprising at least one hydraulic motor, a power supply unit (10), suitable for delivering a pressure and supplying power in parallel to the first group of motors (M1) and to the second group of motors (M2), in such a way as to define a power supply and a discharge of fluid for each of said first group of motors (M1) and second group of motors (M2), and a control unit (100) wherein the control unit (100) is piloted so as to define a variable restriction on the intake of one of said first group of motors (M1) and second group of motors (M2), and a variable restriction of the other of the first group of motors (M1) and second group of motors (M2) **characterized in that**
an operating setpoint is defined,
an operating speed of one of the hydraulic motors of one of said first group of motors (M1) and said second group of motors (M2) is measured by means of a sensor (201, 202),
the operating speed of said hydraulic motor of one of said first group of motors (M1) and said second group of motors (M2) is determined according to the measurement made by said sensor (201, 202),
and
according to the operating set point and the operating speed of the hydraulic motors, the control unit (100) is piloted in such a way as to control the operating speed of the hydraulic motors of the first group of motors (M1) and the operating speed of the hydraulic motors of the second group of motors (M2).
